# EUROPÄISCHE PATENTSCHRIFT

(11) **EP 0 881 476 B1**
(45) Veröffentlichungstag und Bekanntmachung des Hinweises auf die Patenterteilung: **20.08.2003**
(21) Anmeldenummer: 98109527.6
(22) Anmeldetag: 26.05.1998
(51) Int. Cl.: G01G 3/147, G01L 1/22, G01D 5/244

(54) **Trägerfrequenzmessverfahren**
Carrier frequency measuring method
Méthode de mesure utilisant la fréquence d'une porteuse

(30) Priorität: 27.05.1997 DE 19722077
(43) Veröffentlichungstag der Anmeldung: 02.12.1998
(73) Patentinhaber: CARL SCHENCK AG, 64293 Darmstadt (DE)
(72) Erfinder: Raffius, Gerhard, Dr., 63303 Dreieich (DE); Pitz, Jürgen, Dr., 64579 Gernsheim (DE); Sonnenschein, Roland, Dr., 64839 Münster (DE)
(74) Vertreter: Behrens, Helmut, Dipl.-Ing.

(56) Entgegenhaltungen:
- DE-A- 3 125 133
- DE-A- 4 417 228
- US-A- 5 088 330
- REINHARD BERTERMANN: "Für hochgenaues Messen" ELEKTROTECHNIK,DE,VOGEL VERLAG K.G. WURZBURG, Bd. 20, Nr. 68, 25. November 1986 (1986-11-25), Seite 26-32 XP002075737 ISSN: 1431-9578

## Beschreibung

Die Erfindung betrifft ein Meßverfahren für Aufnehmer in Brükkenschaltung und eine Vorrichtung zur Durchführung dieses Meßverfahrens gemäß der Patentansprüche 1 und 4.

Bei Meßverfahren mit DMS-Wandlerelementen in Brückenschaltung werden bei maximaler Last nur wenige Millivolt an Meßspannung erzeugt, die zur Auswertung und Übertragung in entsprechenden Meßverstärkern verstärkt werden. Um diese analogen Meßwerte möglichst störungsfrei übertragen und in Mikroprozessorschaltungen auswerten zu können, werden die analogen Ausgangssignale häufig in digitale Meßwerte umgewandelt und zur weiteren Verarbeitung einem Mikroprozessor zugeführt.

Ein derartiges Meßverfahren eines Trägerfrequenz-Meßverstärkers mit Aufnehmern in Brückenschaltung ist aus dem Kochsiek, Handbuch des Wägens, 2. Auflage, Braunschweig 1989, Seite 551 vorbekannt. Dabei wird in einem Oszillator eine Wechselspannung mit einer Trägerfrequenz erzeugt, die durch die Aufnehmerschaltung mit einem Meßwert moduliert wird. Der amplitudenmodulierte Träger wird im Eingangsverstärker verstärkt. Dieser Eingangsverstärker ist selektiv und überträgt nur Frequenzen im Bereich der Trägerfreuqenz. Die verstärkte Trägerspannung wird demoduliert, die Trägerreste werden ausgefiltert und das Meßsignal abschließend dem Ausgangsverstärker zugeführt.

Zur weiteren Meßwertübertragung und -verarbeitung in einem Mikroprozessorsystem müßte dieses analoge Ausgangssignal einem Analog-Digital-Wandler zugeführt werden. Die vor der Digitalisierung vorgenommene Demodulation wird in der Regel mittels eines phasengesteuerten Gleichrichters vorgenommen, womit immer ein Informationsverlust verbunden ist, die die genaue Kalibrierung und Auswertung der Meßergebnisse erschwert.

Aus der DE 44 17 228 A1 ist auch ein Trägerfrequenzmeßverfahren mit Meßaufnehmern in Brückenschaltung vorbekannt. Dabei wird das Meßsignal vor einer Meßwertübertragung mittels einem Modulationsverstärker moduliert, verstärkt und mit Hilfe eines phasengesteuerten Brückengleichrichters wieder demoduliert. Hierbei muß allerdings sichergestellt werden, daß vor der Demodulation die an der Brücke anliegende Trägerfrequenz mit der Meßspannung phasengleich ist. Etwaige Phasenunterschiede werden deshalb bei Inbetriebnahme durch einen manuellen Phasenausgleich abgeglichen. Da es in der Praxis mit der Zeit erneut zu Phasenverschiebungen kommt, die zu Meßungenauigkeiten führen, müssen derartige Phasenabgleichmaßnahmen in gewissen Zeitabständen wiederholt werden.

Der Erfindung liegt deshalb die Aufgabe zugrunde, ein Trägerfrequenzmeßverfahren der eingangs genannten Art so zu verbessern, daß die Meßgenauigkeit erhöht wird und die Meßgenauigkeit zeitlich konstant bleibt.

Diese Aufgabe wird durch die in den Patentansprüchen 1 und 4 angegebene Erfindung gelöst. Weiterbildungen und vorteilhafte Ausführungsbeispiele der Erfindung sind in den Unteransprüchen angegeben.

Die Erfindung hat den Vorteil, daß durch die direkte Digitalisierung keine Demodulation mehr notwendig ist. Hierdurch werden gleichzeitig aufwendige schmalbandige Filter nach der Demodulation eingespart. Weiterhin kann bei einer erforderlichen Tarierung bzw. einem Nullpunktabgleich dieses mit Hilfe des digitalisierten Meßsignals durch einen Mikroprozessor komplex durchgeführt werden, wodurch die Meßgenauigkeit erhalten bleibt.

Die Erfindung wird anhand eines Ausführungsbeispiels, das in der Zeichnung dargestellt ist, näher erläutert. Es zeigen:
- Fig. 1:: eine Trägerfrequenzmeßschaltung in Vier-Leiter-Anschlußtechnik und
- Fig. 2:: eine Trägerfrequenzmeßschaltung in Sechs-Leiter-Anschlußtechnik.

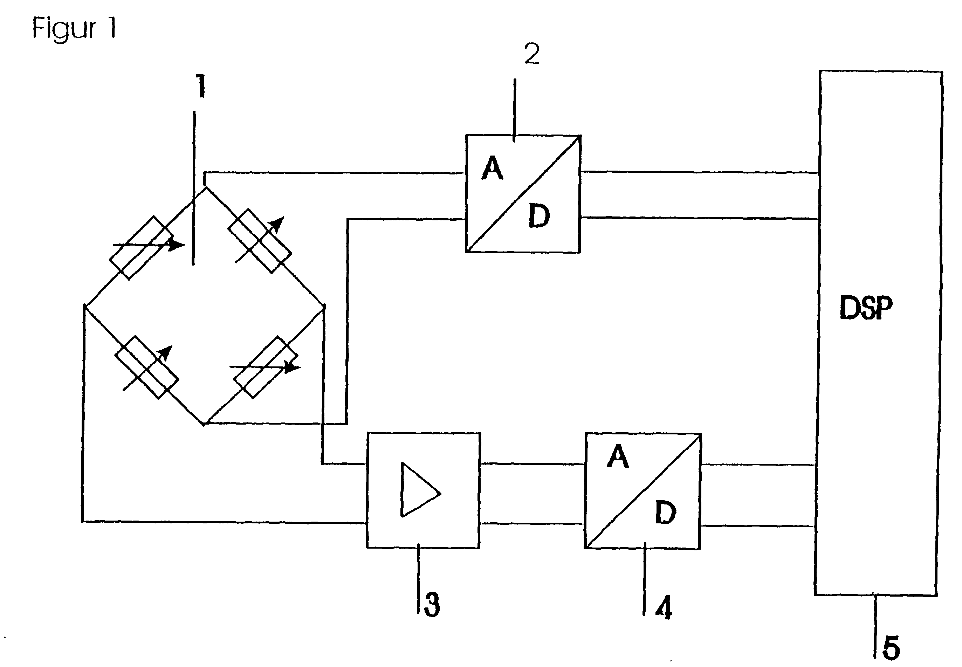

Die Fig. 1 der Zeichnung zeigt den schematischen Aufbau einer Trägerfrequenzmeßschaltung, bei der eine Digital-Signal-Prozessorschaltung 5 über einen Digital-Analog-Wandler 2 eine Aufnehmerbrückenschaltung 1 mit einer Trägerfrequenz speist, die mit einem Meßwert moduliert, verstärkt, digitalisiert und wieder der Digital-Signal-Prozessorschaltung 5 zur Auswertung zugeführt wird.

Der Digital-Signal-Prozessor (DSP) 5 stellt eine Mikroprozessorschaltung dar, die einen Signalgenerator zur Erzeugung einer digitalen Trägerfrequenzspannung enthält. Diese wird einem Digital-Analog-Wandler 2 zugeführt, der aus der digitalen Trägerfrequenzspannung eine sinusförmige Wechselspannung als Träger erzeugt. Dabei hängt die Frequenz in erster Linie von der zu messenden Aufgabe der Aufnehmerschaltung 1 im Bezug auf die Einschwingzeit und der Änderungsgeschwindigkeit des Meßsignals ab. Derartige Schaltungen werden in erster Linie zur Kraftmessung in der Wägetechnik und zur Drehmomentmessung in der Fahrzeugprüftechnik eingesetzt. Es sind aber auch beliebige andere Anwendungsbereiche mittels Meßbrücken denkbar.

Die erzeugte Sinuswechselspannung dient zur Speisung einer Aufnehmerschaltung 1, die als Wheatstone'sche Brückenschaltung ausgebildet ist. Diese Brückenschaltung 1 stellt vorzugsweise einen mit Dehnungsmeßelementen (DMS) versehenen Kraftaufnehmer oder eine DMS-Wägezelle dar, die in der Regel als Vollbrücke geschaltet sind. Es können aber auch Halb- und Viertelbrückenschaltungen vorgesehen werden, um das erfindungsgemäße Meßverfahren zu realisieren.

Die aus einer oder mehreren Kraftaufnehmern oder Wägezellen bestehende Meßbrücke 1 wird eingangsseitig mit einer konstanten sinusförmigen Trägerfrequenzspannung gespeist. Durch die Belastung der Kraftaufnehmer oder der Wägezelle wird der Trägerfrequenzspannung ein Meßspannungsverlauf aufgeprägt, wodurch als Ausgangssignal eine amplitudenmodulierte Meßspannung erzeugt wird, die den Belastungsänderungen der Kraftaufnehmer bzw. der Wägezelle proportional ist. Dieses modulierte analoge Meßsignal liegt in einer Größenordnung von wenigen Millivolt und wird in der Regel durch eine Verstärkerschaltung 3 verstärkt und nachfolgend direkt einem Analog-Digital-Wandler 4 zugeführt. Dabei hat der Analog-Digital-Wandler 4 eine Abtastfrequenz, die einem ganzzahligen Vielfachen, mindestens dem doppelten der Trägerfrequenz entspricht. Als vorteilhaft hat sich in der Praxis eine Abtastfrequenz des Analog-Digital-Wandlers herausgestellt, die ein ganzzahliges Vielfaches der Trägerfrequenz ist. Durch eine derartige Abtastfrequenz hat sich überraschenderweise herausgestellt, daß hierdurch eine Demodulation der modulierten Meßspannung entbehrlich ist.

Die digitalisierte Meßspannung wird nachfolgend wieder dem Digital-Signal-Prozessor 5 zur Auswertung zugeführt. Aus der digitalisierten Meßspannung errechnet der Digital-Signal-Prozessor 5 durch Fouriertransformation sowohl den Betrag als auch die Phase der Meßspannung. Dadurch ist es auf einfache Art und Weise möglich, rechnerisch eine Kalibrierung oder einen Nullpunktabgleich eines Wägesystems bzw. eines Fahrzeugprüfstandes herbeizuführen, wobei auch Phasenänderungen über den Lastbereich berücksichtigt werden. Insbesondere kann durch einmalige Feststellung des Übertragungsverhaltens der Meßkette rechnerisch jede Phasenänderung bei Totlaständerungen mit berücksichtigt werden.

Da derartige Analog-Digital-Wandlerschaltungen 4 als auch Digital-Signal-Prozessoren 5 als integrierte Schaltkreise angeboten werden, können diese unmittelbar mit in den Aufnehmergehäusen untergebracht werden, so daß bereits am Aufnehmer ein direkt anzeigbares oder weiterverarbeitbares digitales Ausgangssignal vorhanden ist. Ein derartiges Ausgangssignal kann danach über lange Übertragungswege geführt werden, ohne daß dabei das den Meßwert enthaltene Signal verfälscht würde. In einem solchen Fall ist es möglich, den Aufnehmer in vorteilhafter Weise in Vier-Leiter-Anschlußtechnik auszuführen, wie dies in Fig. 1 der Zeichnung dargestellt ist.

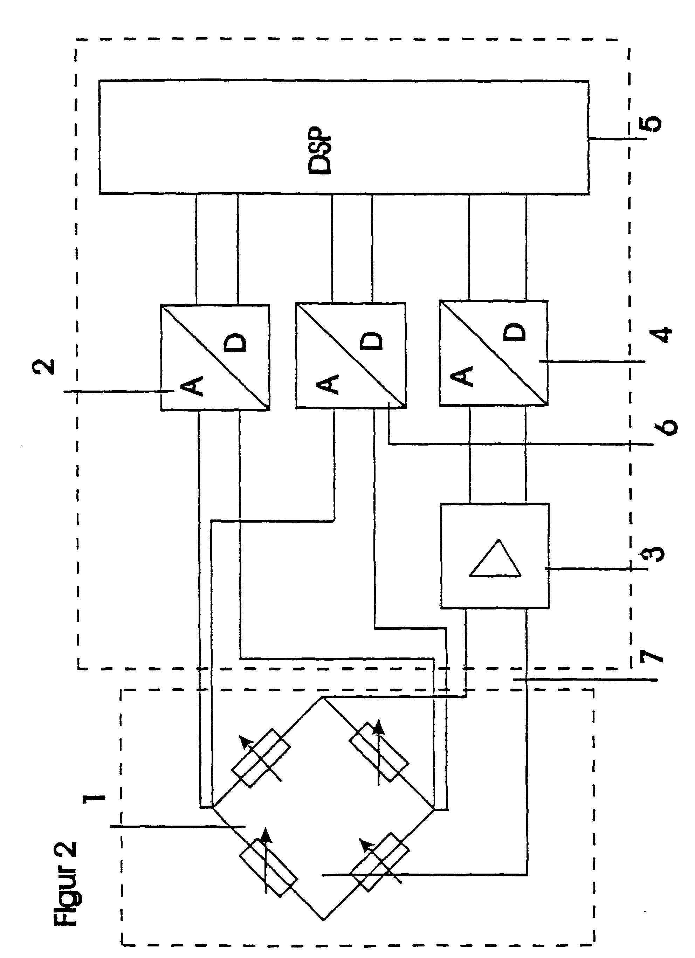

In Fig. 2 der Zeichnung ist schematisch eine Trägerfrequenzmeßvorrichtung dargestellt, die in einer Sechs-Leiter-Anschlußtechnik ausgeführt ist. Dieses Ausführungsbeispiel wird in vorteilhafter Weise vorgesehen, wenn zwischen der Brückenschaltung 1 des Aufnehmers und den integrierten Schaltkreisen 2, 3, 4, 5, 6 längere Meßleitungen 7 notwendig sind, die eine Referenzspannung erforderlich machen. Dazu wird zwischen dem Eingang der Brückenschaltung 1 nach dem Ausführungsbeispiel der Fig. 1 der Zeichnung und dem digitalen Signalprozessor 5 ein zusätzlicher Analog-Digital-Wandler 6 geschaltet, dessen digitales Ausgangssignal als Referenzsignal dient und zur Berücksichtigung des Übertragungsverhaltens der Meßstrecke verwandt wird.

Die Erfindung ist nicht nur auf die zuvor beschriebenen Ausführungsbeispiele beschränkt, sondern ist in nahezu allen Trägerfrequenzmeßverfahren mit Aufnehmern in Brückenschaltungen verwendbar, innehalb des Umfangs der folgenden Ausprüche.

## Patentansprüche

1. Meßverfahren für Aufnehmer in Brückenschaltungen bei dem die Meßbrücke mit einer Wechselspannung als Träger gespeist und mit einem Meßwert moduliert wird, wobei die den Meßwert enthaltende modulierte Meßspannung nachfolgend zur Meßwertermittlung weiterverarbeitbar ist, **dadurch gekennzeichnet, daß** die modulierte Meßspannung direkt einem Analog-Digital-Wandler (4) zugeführt wird, wobei der Analog-Digital-Wandler (4) mit einer Abtastrate arbeitet, die mindestens dem doppelten der Trägerfrequenz entspricht und die digitalisierte Meßspannung einem Digital-Signal-Prozessor (5) zugeführt wird, der aus der digitalisierten Meßspannung mittels Fourier-Transformation ein Meßsignal nach Betrag und Phase berechnet.

2. Meßverfahren nach Anspruch 1, **dadurch gekennzeichnet, daß** die Abtastrate des Analog-Digital-Wandlers (4) ein ganzzahliges Vielfaches der Trägerfrequenz entspricht.

3. Meßverfahren nach Anspruch 1 oder 2, **dadurch gekennzeichnet, daß** aus der analogen Eingangsspannung der Brückenschaltung (1) ein digitales Referenzsignal gebildet wird, das zur Berechnung des Betrages und der Phase der digitalisierten Meßspannung dient.

4. Vorrichtung zur Durchführung des Verfahrens nach einem der Ansprüche 1 bis 3, wobei ein Signalgenerator vorgesehen ist, der mit dem Eingang der Aufnehmerbrückenschaltung (1) verbunden ist, während der Ausgang der Aufnehmerbrückenschaltung (1) über eine Verstärkerschaltung (3) direkt einem Analog-Digital-Wandler (4) zugeführt ist, der mit einem Digital-Signal-Prozessor (5) verbunden ist.

5. Vorrichtung nach Anspruch 4, **dadurch gekennzeichnet, daß** die Trägerfrequenzmeßschaltung in Vier-Leiter-Anschlußtechnik ausgeführt ist, bei der neben dem Digital-Signal-Prozessor (5) zwei Digital-Analog-Wandler (2, 4) und eine Verstärkerschaltung (3) vorgesehen sind.

6. Vorrichtung nach Anspruch 4 oder 5, **dadurch gekennzeichnet, daß** die Verstärkerschaltung (3), die Wandlerschaltungen (2, 4) und der Digital-Signal-Prozessor (5) mit in einem Aufnehmergehäuse integriert sind.

7. Vorrichtung nach Anspruch 4, **dadurch gekennzeichnet, daß** die Trägerfrequenzmeßschaltung in Sechs-Leiter-Anschlußtechnik ausgeführt ist, bei der neben einem Digital-Signal-Prozessor (5) drei Wandlerschaltungen (2, 4, 6) und mindestens eine Verstärkerschaltung (3) vorgesehen sind.

## Claims

1. Measuring method for bridge-connected sensors in which the measuring bridge is supplied with an alternating voltage as a carrier and is modulated with a measured value, wherein the modulated measurement voltage containing the measured value is then processable further to determine the measured value, **characterized in that** the modulated measurement voltage is supplied directly to an analogue-to-digital converter (4), wherein the analogue-to-digital converter (4) operates at a sampling frequency corresponding at least to double the carrier frequency and the digitized measurement voltage is supplied to a digital signal processor (5), which by means of Fourier transform calculates from the digitized measurement voltage the magnitude and the phase of a measurement signal.

2. Measuring method according to claim 1, **characterized in that** the sampling frequency of the analogue-to-digital converter (4) corresponds to an integral multiple of the carrier frequency.

3. Measuring method according to claim 1 or 2, **characterized in that** from the analogue input voltage of the bridge circuit (1) a digital reference signal is formed, which is used to calculate the magnitude and the phase of the digitized measurement voltage.

4. Device for effecting the method according to one of claims 1 to 3, wherein a signal generator is provided, which is connected to the input of the sensor bridge circuit (1), while the output of the sensor bridge circuit (1) is supplied via an amplifying circuit (3) directly to an analogue-to-digital converter (4), which is connected to a digital signal processor (5).

5. Device according to claim 4, **characterized in that** the carrier-frequency measuring circuit is constructed with a four-wire connection system, in which in addition to the digital signal processor (5) two digital-to-analogue converters (2, 4) and an amplifying circuit (3) are provided.

6. Device according to claim 4 or 5, **characterized in that** the amplifying circuit (3), the converter circuits (2, 4) and the digital signal processor (5) are simultaneously integrated in a sensor housing.

7. Device according to claim 4, **characterized in that** the carrier-frequency measuring circuit is constructed with a six-wire connection system, in which in addition to a digital signal processor (5) three converter circuits (2, 4, 6) and at least one amplifying circuit (3) are provided.

## Revendications

1. Procédé de mesure pour capteurs dans des circuits en pont dans lequel le pont de mesure est alimenté avec une tension alternative servant de porteuse et est modulé au moyen d'une valeur de mesure, la tension de mesure modulée contenant la valeur de mesure peut ensuite être retraitée pour la détermination de la valeur de mesure, **caractérisé en ce que** la tension de mesure modulée est envoyée directement dans un convertisseur analogique-numérique (4), le convertisseur analogique-numérique (4) fonctionnant à une fréquence de balayage qui correspond au moins au double de la fréquence porteuse et la tension de mesure numérisée est envoyée à un processeur de signaux numériques (5) qui calcule un signal de mesure en valeur absolue et phase, par transformation de Fourier.

2. Procédé de mesure selon la revendication 1, **caractérisé en ce que** la fréquence de balayage du convertisseur analogique-numérique (4) correspond à un multiple entier de la fréquence porteuse.

3. Procédé de mesure selon la revendication 1 ou 2, **caractérisé en ce qu'**à partir de la tension d'entrée analogique du circuit en pont (1), il est formé un signal de référence numérique qui sert au calcul de la valeur absolue et de la phase de la tension de mesure numérisée.

4. Dispositif pour la mise en oeuvre du procédé selon l'une des revendications 1 à 3, dans lequel est prévu un générateur de signaux qui est relié à l'entrée du circuit en pont (1) du capteur, tandis que la sortie du circuit en pont (1) du capteur est reliée directement, par un circuit d'amplification (3), à un convertisseur analogique-numérique (4) qui est relié à un processeur de signaux numériques (5).

5. Dispositif selon la revendication 4, **caractérisé en ce que** le circuit de mesure de la fréquence porteuse est réalisé dans une technique de raccordement à quatre conducteurs, dans lequel, outre le processeur de signaux numériques (5) sont prévus deux convertisseurs numériques-analogiques (2, 4) et un circuit d'amplification (3).

6. Dispositif selon la revendication 4 ou 5, **caractérisé en ce que** le circuit d'amplification (3), les circuits de convertisseur (2, 4) et le processeur de signaux numériques (5) sont intégrés dans un boîtier de capteur.

7. Dispositif selon la revendication 4, **caractérisé en ce que** le circuit de mesure de la fréquence porteuse est réalisé dans une technique de raccordement à six conducteurs, dans lequel, outre un processeur de signaux numériques (5) sont prévus trois circuits de convertisseur (2, 4, 6) et au moins un circuit d'amplificateur (3).
